# EUROPEAN PATENT APPLICATION

(11) **EP 2 063 235 A2**
(43) Date of publication of application: **27.05.2009**
(21) Application number: 08163135.0
(22) Date of filing: 28.08.2008
(51) Int. Cl.: G01F 23/00, G01F 23/20, G01F 9/00

(54) **Precision gauge for liquid fuel in a vehicle's tank**

(30) Priority: 30.08.2007 UY 4193 U
(71) Applicant: Barreiro Oxocelhay, Daniel Angel, Montevideo (UY)
(72) Inventor: Barreiro Oxocelhay, Daniel Angel, Montevideo (UY)
(74) Representative: Elzaburu Marquez, Alberto

(57) **Abstract**

Precision gauge for liquid fuel in a vehicle's tank, based on the usage of electronic scales, a computer, the odometer and an electronic circuit based on the tank weight previous to the loading (Weight 1), density of the used fuel (previously digitized in the computer) and the weight of the tank after loading it (Weight 2); allows visualizing by means of a proper device (digital display), the volume of fuel contained in such tank, VOLUME_= (Weight 2-Weight 1)/DENSITY and eventually to appreciate the amount of fuel consumed by the vehicle per unit of time and/or per kilometer covered.

## Description

### FIELD OF INVENTION

The "precision gauge" suggested belongs to the areas of electronics, general application mechanics and especially to the automobile industry.

### BACKGROUND OF THE INVENTION

The measuring of the fuel loaded up in a vehicle's tank is NOWADAYS done by means of a not much precise float. The solution suggested for such lack of precision consists in weighing the fuel tank with an electronic scales, what, in view of the loaded fuel's density and a computer, allows calculating the precise volume of fuel loaded at once.

The proposal, among others, has two advantages regarding what it is already known:
1) It allows the vehicle's driver to have his/her own perfectly precise fuel gauge, which shall be delivered in the gas station.
2) The combination of means already known such as a computer and the car's odometer enables the driver to be aware of the performance of kilometers per unit of time and/or per liter in the stretch he/she wants, and in a precise way.

In view of the above, please note that with regular electronic scales from a retail store the precision is of 5 grams; this is to say that if fuel is a little much lighter than water, precision is slightly greater than 5 cubic centimeters.

### SUMMARY OF THE INVENTION

A precision gauge for measuring liquid fuel in a vehicle's tank has precision electronic scales which are connected to a vehicle's fuel tank and a computer. The computer determines a first weight of the contents of the tank prior to loading, and a second weight based on information received from the scales after loading. Based on the difference between the second weight and the first weight and the corresponding density of the loaded fuel previously entered at least once per vehicle, the volume of the loaded fuel is determined and displayed based upon the formula of the second weight less the first weight divided by the density.

### BRIEF DESCRIPTION OF THE DRAWINGS

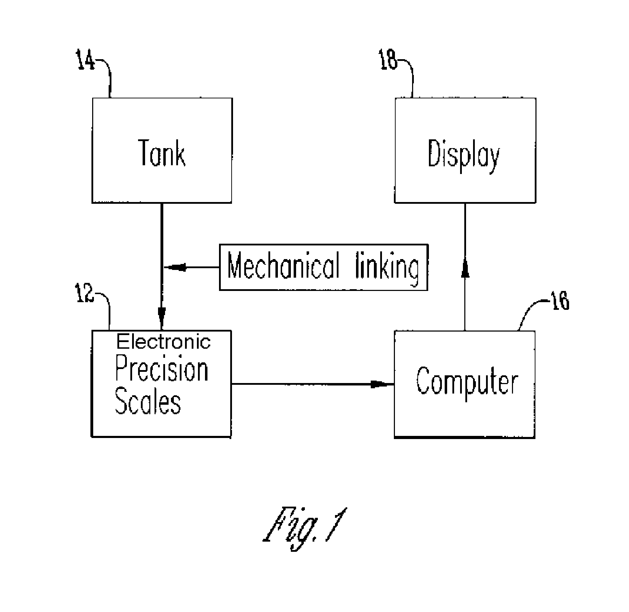

Fig. 1 is a schematic of the environment for a precision gauge.

### DETAILED DESCRIPTION OF THE PREFERRED EMBODIMENT

Electronic precision scales 12 which is connected with the vehicle's fuel tank 14.

A computer 16 that based on -as first information- the fuel tank's weight with its contents previous to the loading (Weight 1), and on the information received from the scales (weight of the tank after loading. Weight 2), and on the corresponding density previously entered in the computer (maybe just once per vehicle); determines the volume of loaded up fuel that can be noticed in a display 18 (digital display) located in the vehicle's board. Resultant from the mathematic relation between weight, volume and density (Vol= (Weight 2-Weight 1)/density).

An electronic circuit linking all different components of the device. The inclusion or digitizing in the computer 16 of the empty tank's weight (tare) allows being acquainted with the contents of the tank 14 at any time (Volume= (weight of the tank with load to be determined-tare)/density).

It may otherwise include:
A computer 16 that based on the evolution of the reduction of fuel weight, reports about consumption per unit of time.
A mechanical, electric or electric-mechanical device that if necessary, while the car is on, from controls located next to the driver, releases the mechanical link between scales and fuel tank. This is to avoid affecting the mechanisms of the scales faced with the speed and consequent movements.

## Claims

1. Precision gauge for liquid fuel in a vehicle's tank **characterized** for containing:
a precision electronic scales which is connected to the vehicle's fuel tank;
a computer that based on -as first information- the fuel tank's weight with its contents previous to the loading (Weight 1), and on the information received form the scales (weight of the tank after loading, Weight 2), and on the corresponding density previously entered in the computer (maybe just once per vehicle); determines the volume of loaded up fuel that can be noticed in a display (digital display) located in the vehicle's board. Resultant form the mathematic relation between weight, volume and density (Vol= (Weight 2-Weight 1)/density);
an electronic circuit linking the different components of the device.

2. Precision gauge for liquid fuel in a vehicle's tank according to Claim 1, **characterized** for including: a mechanical, electric or electric-mechanical device that if necessary, while the car is on, from controls located next to the driver, releases the mechanical link between scales and fuel tank.

3. Precision gauge for liquid fuel in a vehicle's tank according to Claim 1, **characterized** for: the computer, based on the evolution of the reduction of fuel weight, reports about the consumption per unit of time and/or per kilometer covered.
